# EUROPEAN PATENT SPECIFICATION

(11) **EP 2 440 781 B1**
(45) Date of publication and mention of the grant of the patent: **01.04.2015**
(21) Application number: 10720638.5
(22) Date of filing: 03.06.2010
(51) Int. Cl.: F03D 11/00, F03D 7/02

(54) **A WIND POWER PLANT AND A METHOD OF OPERATING A WIND POWER PLANT**
WINDKRAFTANLAGE UND VERFAHREN FÜR DEN BETRIEB EINER WINDKRAFTANLAGE
CENTRALE ÉLECTRIQUE ÉOLIENNE ET PROCÉDÉ D'EXPLOITATION D'UNE CENTRALE ÉLECTRIQUE ÉOLIENNE

(30) Priority: 08.06.2009 SE 0950422
(43) Date of publication of application: 18.04.2012
(73) Proprietor: GE Wind Energy (Norway) AS, 0278 Oslo (NO)
(72) Inventor: WICKSTROM, Anders, S-652 24 Karlstad (SE)
(74) Representative: Bedford, Grant Richard
(86) International application number: PCT/EP2010/057791
(87) International publication number: WO 2010/142600

(56) References cited:
- EP-A1- 1 375 913
- WO-A1-2007/012195
- WO-A2-2009/043352
- US-B1- 6 890 152

## Description

The present invention relates generally to a wind power plant (a windmill, wind turbine). The invention also relates to a method of operating the wind power plant. The method involves de-icing the turbine blades of the wind power plant.

If an ice sheet is formed on the surface of an aerodynamic body such as a wing or a turbine blade in a wind power plant, this will have a negative effect on the air flow over the aerodynamic body. In a wind power plant, ice on the turbine blades can cause imbalances that reduce the power output from the power plant. If large amounts of ice form on the turbine blades, it may even become impossible to continue operation and the wind power plant must be shut down until the ice has been removed from the turbine blades. When the load caused by imbalances becomes too large, this may cause damages to the power plant itself. It may also happen that the profile of the blades is altered in such a way that the blades are not so easily rotated by the wind.

In EP 1377503, it has been suggested that a microwave system be used to keep parts of a hollow body ice-free. The hollow body may be a turbine blade in a wind power plant. Ice sensors may be used in this known device. US patent No. 7057305 discloses a wind power installation where heated air may be used to heat the rotor blades during the cold season to eliminate ice buildup.

US patent No. 6890152 discloses a deicing device for wind turbine blades in which a turbine blade, or a portion thereof, is caused to vibrate such that ice built up on the wind turbine blade is caused to break off. To cause the turbine blades to vibrate, each of the turbine blades includes one or more vibrators. The vibrators include one or more acoustic wave generators such as sonic horns.

WO 2009/043352 discusses a method for de-icing a blade of a wind turbine in which a controlled acceleration of the blade is followed by a controlled deceleration of the blade.

The prior art devices for de-icing the turbine blades of a wind power plant require additional equipment on the blades themselves for performing the de-icing operation. Moreover, the solutions according to the prior art may require some time before the ice has melted unless they are applied constantly. The known solutions may also require a relatively large amount of energy to remove the ice.

It is an object of the present invention to provide an alternative to the solutions known from the prior art. It is another object of the invention to provide a way of de-icing the rotor blades that is fast and effective. These and other objects are addressed by various aspects of the present invention as will be explained in the following.

Various aspects and embodiments of the present invention are defined by the appended claims.

Before the de-icing operation is carried out, the turbine blades are turned such that, in the plane in which the turbine blades rotate, the bending stiffness of the turbine blades is reduced and preferably minimized. From a starting position in which the turbine blades are facing the wind, this normally means that the turbine blades are turned away from the direction of the wind such that the area of the turbine blades that faces the wind is reduced. Preferably, the area facing the wind is minimized.

Optionally, if the turbine blades are rotating when the criterion that indicates that ice has formed is satisfied, the speed of the rotation of the turbine blades is reduced before the de-icing operation is carried out.

Optionally, the turbine blades are first halted completely before the de-icing operation is carried out.

During the de-icing operation, the turbine blades are driven alternatingly in opposite directions at a frequency that, optionally, is selected to generate self-oscillation in the turbine blades.

During the de-icing operation, the turbine blades may optionally be driven by a generator of the wind turbine which generator is driven by the turbine blades during normal operation of the wind power plant and wherein, during the de-icing operation, the generator drives the turbine blades.

After the de-icing operation has been carried out, the turbine blades may optionally be monitored to determine whether there is still ice on the turbine blades and, if it is determined that the turbine blades are sufficiently ice-free, the wind power plant is operated to generate electricity.

According to an aspect of the invention, the generator is arranged to be able to drive the turbine blades alternatingly in two opposite directions.

Optionally, the generator and the turbine blades are directly coupled to each other without any intermediate gear.

Optionally, the wind power plant further comprises a control unit connected to the detector(s) and to the generator and, in response to a signal from the detector (or detectors) that indicates the presence of ice on one or several turbine blades, cause the generator to drive the turbine blades alternatingly in two opposite directions.

In this context, the term "a signal" should be understood as meaning "at least one signal" since there could of course be many signals that each indicate that ice has formed. It should also be understood that the term can refer to a plurality of different signals that, when evaluated together, indicate that ice has formed.

Various aspects and embodiments of the present invention will now be described in connection with the accompanying drawings, in which:
Figure 1 shows, schematically, a wind power plant.
Figure 2 is a cross-section of a part of the wind power plant.
Figure 3 is a cross-sectional view of a turbine blade.
Figure 4 is a schematic illustration of the basic principle of various aspects of the invention.
Figures 5a - 5b show, from above, how the turbine blades can be turned away from the wind.
Figures 6a - 6b are front views corresponding to Figures 5a and 5b.
Figure 7 is a front view that schematically shows the operation of an inventive method according to aspects of the present invention.
Figure 8 is a cross-sectional view of a turbine blade that is covered by a sheet of ice.
Figure 9 is a cross-sectional view corresponding to Figure 8 and showing how a turbine blade is de-iced.

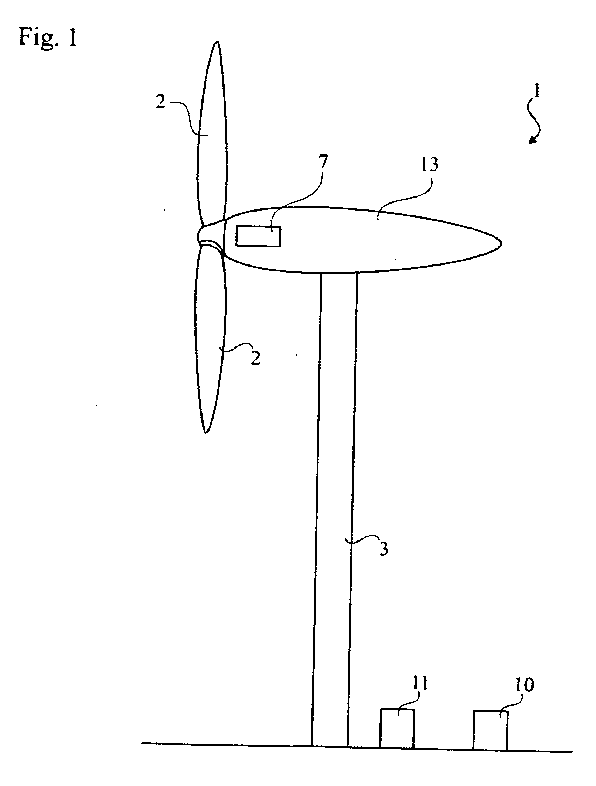

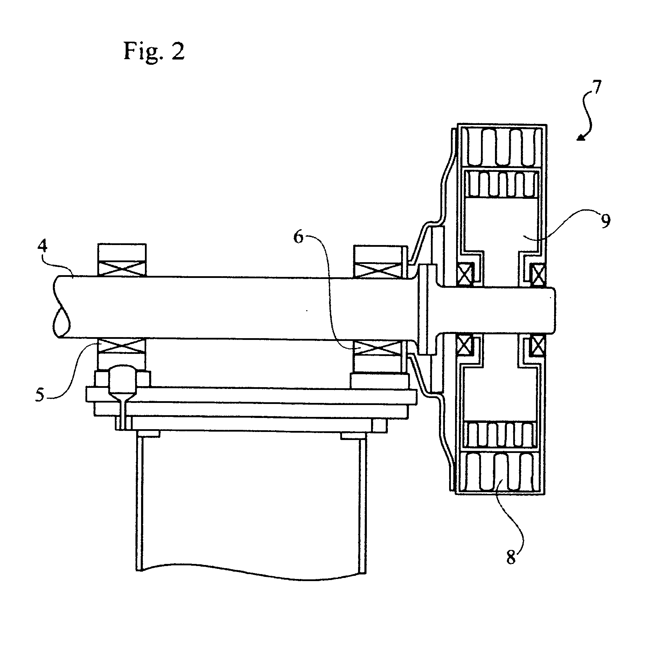

With reference to Fig. 1, a wind power plant 1 has turbine blades 2 that are rotatably mounted on a support 3 such as a tower. In the embodiment showed in Fig. 1, the tower 3 has a nacelle 13 in which a turbine shaft of the turbine blades 2 may be rotatably journalled. In principle, the wind power plant may have any dimensions. However, in many realistic embodiments, the turbine blades 2 may have a length in the range of 10 m - 60 m, for example 15 m - 50 m. It should be understood that embodiments are also possible where the turbine blades 2 may be longer than 60 m or shorter than 10 m. The turbine blades 2 are arranged to drive a generator 7 that may be located inside the nacelle 13. Embodiments can also be envisaged without the nacelle 13 or where the generator 7 is not located in the nacelle 13. The generator 7 may be arranged in a way described in, for example, EP 1327073 B1. In Fig. 2, it is showed how the generator 7 may be designed and arranged such that a turbine shaft 4 that is driven by the turbine blades 2 drives the rotor 9 of the generator 7. In Fig. 2, the drive shaft 4 is held in bearings 5, 6 and a final part of the turbine shaft 4 is rigidly connected to the rotor 9. The reference numeral 8 designates the stator. The turbine shaft 4 is preferably rigidly connected to the turbine blades. In this way, generator 7 and the turbine blades 2 are directly connected to each other without any intermediate gear, the rotor 9 rigidly follows the movement of the turbine blades 2. However, the generator 7 may also be designed in other ways. For reasons that will be explained, it is preferred that the turbine blades 2 are directly connected to the generator 7 without any intermediate gear. However, embodiments are also conceivable where there is an intermediate gear between the turbine blades 2 and the generator 7.

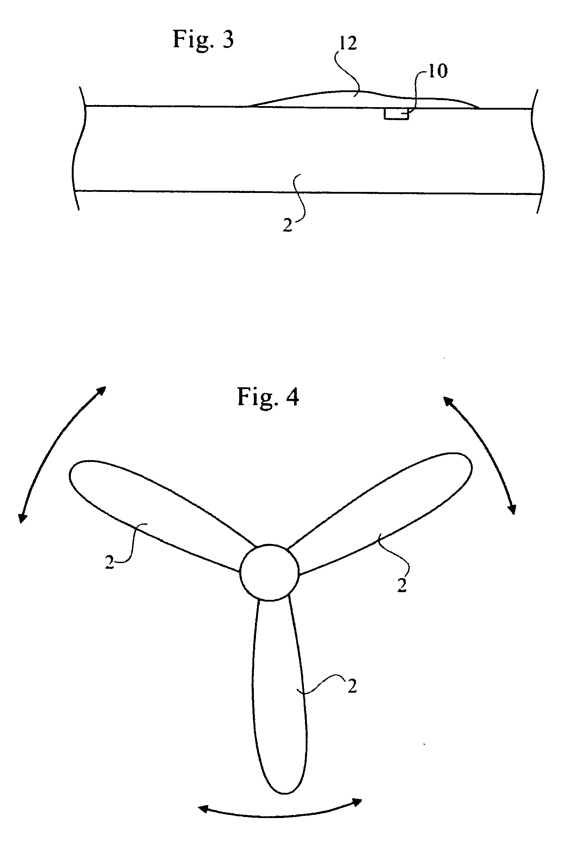

With reference to Fig. 3, one or several ice detectors 10 may advantageously be placed on or below the surface of one or several turbine blades 2. Such a detector can be used to detect the presence of a layer of ice 12 on the surface of a turbine blade 2. With reference to Fig.1, a detector 10 must not necessarily be placed on a turbine blade 2. As an alternative, a detector 10 may be placed in a zone surrounding the wind power plant 1. Such a detector 10 (or a group of detectors 10) could monitor one or several conditions that are likely to result in the formation of ice on the turbine blades 2. For example, detectors 10 could monitor temperature and precipitation or air humidity. If it is known that certain combinations of temperature and precipitation or air humidity are likely to lead to the formation of ice, this can be used to formulate a condition that is deemed indicative of ice formation on the turbine blades. Such a monitoring can be understood as an indirect detection of ice. Instead of directly detecting ice, a condition is detected that signals an increased likelihood that is has formed. When one or several detectors 10 are located in a zone surrounding the wind power plant, they should preferably be located relatively near the wind power plant such that the conditions they monitor are relevant for the conditions on the turbine blades 2. For example, they may be located within 500 meters from the hub around which the turbine blades 2 rotate.

It should be understood that many different parameters may be used to determine if ice has formed on the turbine blades 2, or whether it can be suspected that ice has formed. For example, the output from the wind power plant can be monitored and compared to an expected value at a given wind speed. The wind speed is measured and based on the speed of the wind, calculation or previous experience can be used to determine what the output from the wind power plant ought to be. If the actual output is lower, this may be an indication that ice has formed on the rotor blades 2. A lower output than expected can then be treated as an indication that ice gas formed. Generally speaking, it can thus be stated that the wind power plant 1 has equipment 10, 11 arranged to detect whether a criterion indicative of ice formation on the turbine blades 2 is satisfied. If this criterion is satisfied, the generator 7 will be caused to drive the rotor blades alternatingly in opposite directions.

With reference to Fig. 1, the wind power plant may comprise a control unit 11, for example a computer. In Fig. 1, the control unit 11 is showed outside the nacelle 13 and the tower 3. In many practical embodiments, the control unit may also be located inside the nacelle 13 or in the tower 3. The control unit 11 may be connected to the generator 7 an arranged to monitor output from the wind power plant, possibly with the aid of a special measuring unit or detector 10 for measuring output.

The basic idea of various aspects of the invention will now be explained with reference to Fig. 4. The turbine blades 2 are monitored by means of one or several detectors 10 to determine whether ice has formed on the turbine blades or not. Alternatively, a zone a zone around the wind power plant is monitored. It should be understood that the detector 10 that is showed in Fig. 1 may take many different shapes. For example, the detector 10 could be a wind speed detector or a thermometer. Although only one detector 10 is showed, it should be understood that many detectors 10 may be used. When many detectors are used, they can also be designed to measure and/or detect different parameters. For example, one detector could be designed to measure temperature while another detector 10 is designed to measure and/or detect precipitation while yet another detector 10 is used to measure wind speed. A separate detector 10 or measuring device may also be used to measure or determine the rotational speed of the turbine blades 2. A detector 10 could also be integrated with the generator 7 and/or the control unit 11 and arranged to measure output from the wind power plant.

The detector 10 or detectors 10 could also be ice detectors 10 that are located in or on the rotor blades 2. An example of a sensor that can be used to detect ice is disclosed in US patent No. 5206806 and such a sensor could be used also in connection with the present invention.

If one or several detectors 10 indicate that ice has formed on the turbine blades 2, or, if one or several detectors 10 indicate a condition where the formation of ice is considered likely, it is deemed that a criterion indicating that ice 12 has formed on the turbine blades 2 is satisfied. It should be understood that, in many realistic embodiments, the detectors 10 would cooperate/interact with the control unit 11 when it is determined that the criterion for ice formation is satisfied. However, it is also possible that an operator simply looks at one or several detectors 10 and determines whether the criterion is satisfied or not. Embodiments of the inventive method are also conceivable where ice detection is determined simply by visual inspection of the wind power plant. A human operator may look at the wind power plant and determine whether he believes that ice has formed. If, after looking at the wind power plant, the operator believes that ice has formed on the rotor blades, then a criterion indicating that ice has formed on the turbine blades 2 is satisfied.

If this criterion is satisfied, a de-icing operation is performed on the turbine blades 2 to remove ice from the turbine blades. As schematically indicated in Fig. 4, the deicing operation comprises driving the turbine blades 2 of the wind power plant 1 alternatingly in opposite directions. Thereby, vibrations will be generated in the turbine blades 2 and these vibrations will cause ice to leave the surface of the turbine blades 2.

As indicated in Fig. 4, the turbine blades 2 may possibly retain their angular orientation during the de-icing operation. However, the de-icing operation can be made more effective if, before the de-icing operation is carried out, the turbine blades 2 are turned away from the direction of the wind such that the area of the turbine blades 2 that faces the wind is reduced.

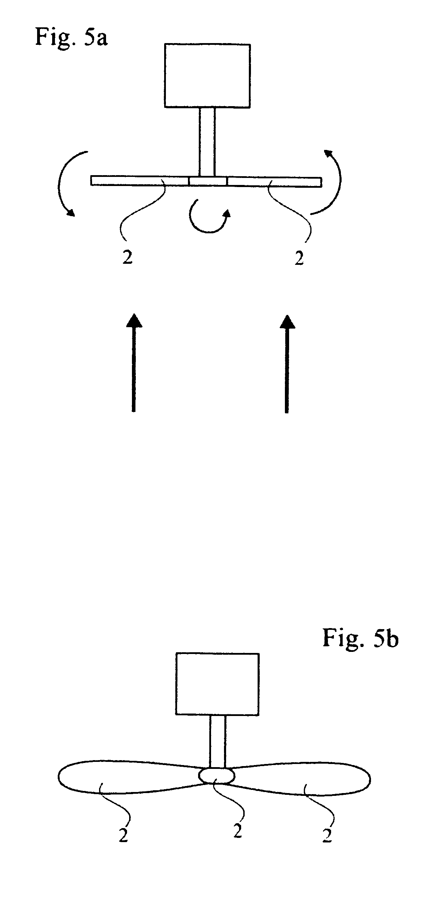

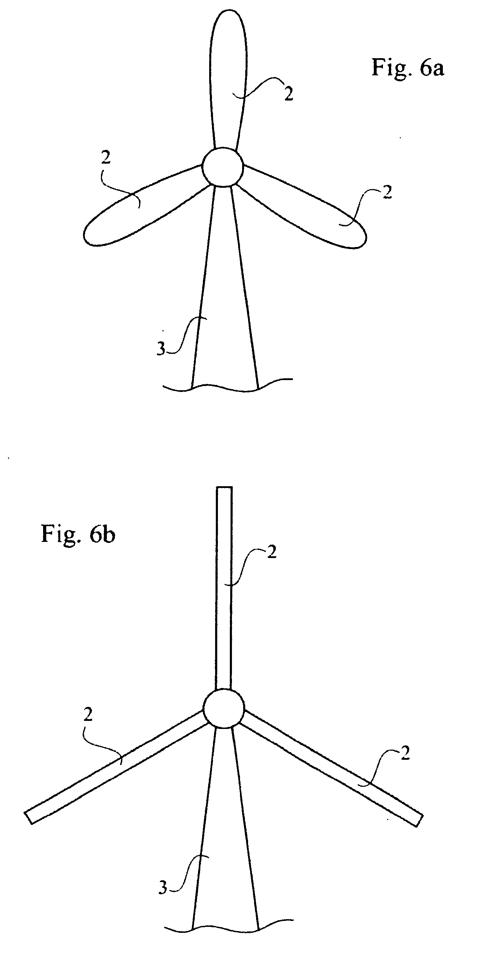

With reference to Fig. 5a and Fig. 6a, the turbine blades 2 will, during normal operation of the wind power plant 1, usually be turned such that they are essentially facing the wind, i.e. the side facing the wind is relatively flat. If the turbine blades are driven back and forth in this position, the stiffness of the blades 2 in the plane of rotation of the blades 2 will be relatively high which makes it more difficult to generate strong vibrations in the turbine blades 2.

To make it easier to generate strong vibrations in the turbine blades 2, the turbine blades 2 can be turned before the de-icing operation is carried out such that, in the plane in which the turbine blades 2 rotate, the bending stiffness of the turbine blades 2 is reduced. From a starting position in which the turbine blades 2 are facing the wind, this means that the turbine blades are turned away from the wind such that the area of the turbine blades 2 that face the wind is reduced.

Preferably, the turbine blades 2 are turned to such an extent that, in the plane in which the turbine blades 2 rotate, the bending stiffness of the turbine blades 2 is minimized.

If the turbine blades 2 are rotating when the criterion that indicates that ice has formed is satisfied, the speed of the rotation of the turbine blades 2 is reduced before the de-icing operation is carried out. Preferably, the movement of the turbine blades 2 is completely halted before the de-icing operation is initiated. By slowing down or halting the turbine blades 2 before de-icing is initiated, the de-icing operation will become more effective and the risk of damage to the turbine blades or other equipment is reduced. Normally, the turbine blades 2 would be halted by pitching the blades to feather, i.e. pitching the blades to a position where they no longer catch the wind. Alternatively, a separate brake may be used to slow down or halt the movement of the turbine blades 2. The generator 7 itself could also be used as a brake for the turbine blades. Thereby, the advantage is gained that no separate braking device is needed.

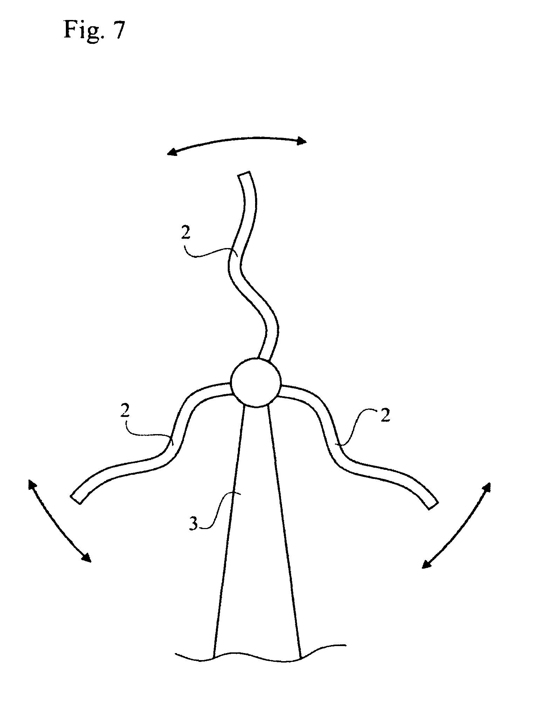

In Fig. 5b and Fig. 6b, it can be seen how the turbine blades 2 have been turned such that they have minimal stiffness in the plane in which the turbine blades 2 are to be rotated/driven alternatingly in opposite directions during de-icing. As a consequence the turbine blades 2 will bend relatively easy which is schematically indicated in Fig. 7.

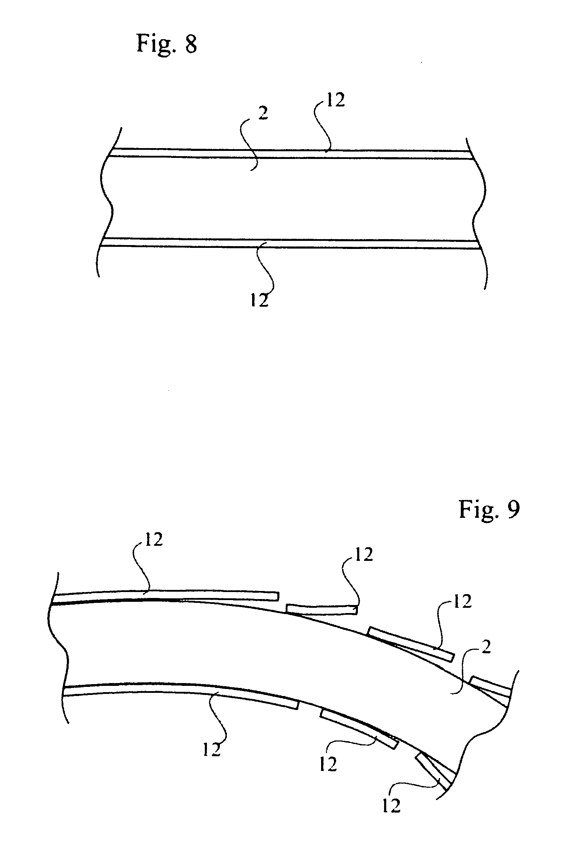

With reference to Figure 8, it can be seen how a layer of ice 12 has formed on the surface of a turbine blade 2. Figure 9 shows how the turbine blade 2 is bending due to vibrations that has been generated in the turbine blade 2 by the act of driving the turbine blades 2 alternatingly in opposite directions. As a consequence, pieces of ice 12 break loose from the turbine blade 2 and ice is removed from the turbine blade 2.

In principle, the de-icing operation can be initiated directly after it has been detected that ice has formed. This can mean that the turbine blades 2 are already rotating when the de-icing operation is initiated. However, this would probably be unrealistic unless the turbine blades were to rotate at a very low speed. Normally, it would be necessary to halt the turbine blades 2 completely before the de-icing operation is carried out. Alternatively, the rotation of the turbine blades 2 could be slowed down to a very low level.

When the turbine blades 2 are driven alternatingly in opposite directions, this may preferably be done at a frequency that is selected to generate self-oscillation in the turbine blades 2, the natural frequency. In this way, self-vibrations in the turbine blades 2 can be induced such that the vibrations become more forceful. The choice of frequency may thus depend on the dimensions of the turbine blades 2 in each single case. In many realistic embodiments, the actual frequency may be on the order of about one (1) Hertz.

In principle, the turbine blades 2 may be driven by anything that is capable of driving the turbine blades alternatingly in opposite directions. A separate drive unit may be provided for this purpose. However, in preferred embodiments of the invention, the de-icing is carried out by the generator 7 which is itself driven by the turbine blades during normal operation of the wind power plant. When the generator 7 is used to drive the turbine blades 2, a separate drive unit is not needed. This makes the wind power plant 1 less expensive and less complicated to build.

In principle, the generator 7 may be arranged to drive the turbine blades 2 through an intermediate gear. In such a case, the generator 7 would itself probably be driven by the turbine blades 2 through the intermediate gear. However, in preferred embodiments of the invention, the generator 7 (together with the turbine shaft 4) is arranged to drive the turbine blades 2 directly without using any intermediate gear. This also means that, during normal operation, the generator 7 is driven directly by the turbine blades 2 and their turbine shaft 4 without any intermediate gear. Such an embodiment is preferable since an intermediate gear would risk being damaged if the direction of movement were to be changed rapidly back and forth. The generator 7 is then arranged to be able to drive the turbine blades 2 alternatingly in two opposite directions.

After the de-icing operation has been carried out, the turbine blades 2 may be monitored to determine whether there is still ice 12 on the turbine blades. If it is determined that the turbine blades 2 are sufficiently ice-free, the wind power plant 1 can be operated to generate electricity. If not, a new de-icing operation can be performed.

With reference again to Figure 1, the control unit 11 is suitably connected to the detector(s) 10 and to the generator 7. In response to a signal from the detector(s) 10 that indicates the presence of ice on one or several turbine blades 2, the control unit 11 may be programmed to cause the generator 7 to drive the turbine blades 2 alternatingly in two opposite directions.

It should be understood that the use of detectors 10 is optional. This is the case since monitoring for ice formation can be achieved by means of visual inspection by a human operator. It should also be understood that the control unit 11 is also optional. Embodiments are conceivable where a human operator directly controls the operation of the generator 7.

Although the invention has been described above in terms of a method and a wind power plant, it should be understood that these categories only reflect different aspects of one and the same invention. The wind power plant is designed to carry out the inventive method. In the same way, the method may also comprise such steps that would be the result of operating the equipment of the wind power plant, even if such steps have not been explicitly mentioned.

## Claims

1. A method for operating a wind power plant (1) having a generator (7), and turbine blades (2) on which ice has formed, the method comprising a de-icing operation to remove the ice from the turbine blades (2), and wherein the de-icing operation comprises driving the turbine blades (2) of the wind power plant (1) alternatingly in opposite directions such that vibrations in the turbine blades (2) are generated wherein the turbine blades (2) are driven alternatingly in opposite directions by the generator (7), **characterized in that**, before the de-icing operation is carried out, the turbine blades (2) are turned in a direction away from a direction of the wind such that, in the plane in which the turbine blades (2) rotate, the bending stiffness of the turbine blades (2) is minimized and the area of the turbine blades (2) that faces the wind is also reduced.

2. A method according to claim 1, wherein the method also comprises performing a monitoring operation to determine if a criterion that indicates that ice (12) has formed on the turbine blades is satisfied and performing the de-icing operation if this criterion is satisfied.

3. A method according to any preceding claim, wherein, if the turbine blades (2) are rotating when the criterion that indicates that ice has formed is satisfied, the speed of the rotation of the turbine blades is reduced before the de-icing operation is carried out.

4. A method according to any preceding claim, wherein the turbine blades (2) are first halted completely before the de-icing operation is carried out.

5. A method according to any preceding claim, wherein, during the de-icing operation, the turbine blades (2) are driven alternatingly in opposite directions at a frequency that is selected to generate self-oscillation in the turbine blades.

6. A method according to any preceding claim, wherein, during the de-icing operation, the turbine blades (2) are driven by the generator (7) of the wind turbine which generator (7) is driven by the turbine blades (2) during normal operation of the wind power plant (1) and wherein, during the de-icing operation, the generator (7) drives the turbine blades (2) directly without using any intermediate gear.

7. A method according to any preceding claim, wherein, after the de-icing operation has been carried out, the turbine blades (2) are monitored to determine whether there is still ice (12) on the turbine blades and, if it is determined that the turbine blades (2) are sufficiently ice-free, the wind power plant (1) is operated to generate electricity.

8. A method according to claim 2 or any claim dependent thereon, wherein the monitoring operation comprises measuring the actual output from the wind power plant and (1) comparing it to an expected output.

## Patentansprüche

1. Verfahren zum Betreiben einer Windenergieanlage (1) mit einem Generator (7) und Rotorblättern (2), auf denen sich Eis gebildet hat, wobei das Verfahren einen Enteisungsvorgang umfasst, um das Eis von den Rotorblättern (2) zu entfernen, und wobei der Enteisungsvorgang das Antreiben der Rotorblätter (2) der Windenergieanlage (1) abwechselnd in einander entgegengesetzten Richtungen umfasst, sodass Vibrationen in den Rotorblättern (2) erzeugt werden, wobei die Rotorblätter (2) vom Generator (7) abwechselnd in einander entgegengesetzten Richtungen angetrieben werden, **dadurch gekennzeichnet, dass** vor dem Durchführen des Enteisungsvorgangs die Rotorblätter (2) derart in einer Richtung weg vom Wind gedreht werden, dass die Biegesteifigkeit der Rotorblätter (2) in der Ebene, in der sich die Rotorblätter (2) drehen, minimiert wird und die Oberfläche der Rotorblätter (2), die dem Wind ausgesetzt ist, ebenfalls verringert wird.

2. Verfahren nach Anspruch 1, wobei das Verfahren ferner Folgendes umfasst: Durchführen eines Überwachungsvorgangs, um festzustellen, ob eine Bedingung, die darauf hinweist, dass sich Eis (12) auf den Rotorblättern gebildet hat, erfüllt ist, sowie Durchführen des Enteisungsvorgangs, wenn diese Bedingung erfüllt ist.

3. Verfahren nach einem der vorhergehenden Ansprüche, wobei, wenn sich die Rotorblätter (2) drehen, wenn die Bedingung, die darauf hinweist, dass sich Eis gebildet hat, erfüllt ist, die Drehzahl der Rotorblätter verringert wird, bevor der Enteisungsvorgang durchgeführt wird.

4. Verfahren nach einem der vorhergehenden Ansprüche, wobei die Rotorblätter (2) zunächst vollständig angehalten werden, bevor der Enteisungsvorgang durchgeführt wird.

5. Verfahren nach einem der vorhergehenden Ansprüche, wobei während des Enteisungsvorgangs die Rotorblätter (2) mit einer derart ausgewählten Frequenz abwechselnd in einander entgegengesetzten Richtungen angetrieben werden, dass eine Selbstoszillation in den Rotorblättern erzeugt wird.

6. Verfahren nach einem der vorhergehenden Ansprüche, wobei die Rotorblätter (2) während des Enteisungsvorgangs von dem Generator (7) der Windkraftanlage angetrieben werden, wobei der Generator (7) beim normalen Betrieb der Windenergieanlage (1) von den Rotorblättern (2) angetrieben wird, und wobei während des Enteisungsvorgangs der Generator (7) die Rotorblätter (2) ohne Zwischengetriebe direkt antreibt.

7. Verfahren nach einem der vorhergehenden Ansprüche, wobei nach dem Durchführen des Enteisungsvorgangs die Rotorblätter (2) überwacht werden, um zu bestimmen, ob sich noch immer Eis (12) auf den Rotorblättern befindet und wobei, falls bestimmt wird, dass die Rotorblätter (2) ausreichend eisfrei sind, die Windenergieanlage (1) betrieben wird, um Elektrizität zu erzeugen.

8. Verfahren nach Anspruch 2, oder nach einem davon abhängigen Anspruch, wobei der Überwachungsvorgang das Messen der tatsächlichen Leistungsabgabe der Windenergieanlage (1) und das vergleichen dieses Werts mit einer erwarteten Leistungsabgabe umfasst.

## Revendications

1. Procédé d'exploitation d'une centrale électrique éolienne (1) ayant un générateur (7) et des pales de turbine (2) sur lesquelles s'est formée de la glace, le procédé comprenant une opération de dégivrage pour éliminer la glace des pales de turbine (2) et dans lequel l'opération de dégivrage comprend l'entraînement des pales de turbine (2) de la centrale électrique éolienne (1) en alternance dans des sens opposés de sorte que des vibrations soient générées dans les pales de turbine (2), dans lequel les pales de turbine (2) sont entraînées en alternance dans des sens opposés par le générateur (7), **caractérisé en ce que**, avant d'effectuer l'opération de dégivrage, on fait tourner les pales de turbine (2) dans une direction s'écartant de la direction du vent de sorte que, dans le plan où les pales de turbine (2) tournent, la rigidité à la flexion des pales de turbine (2) soit minimisée et que la surface des pales de turbine (2) qui fait face au vent soit également réduite.

2. Procédé selon la revendication 1, dans lequel le procédé comprend également la réalisation d'une opération de surveillance pour déterminer si un critère indiquant que de la glace (12) s'est formée sur les pales de turbine est satisfait et la réalisation de l'opération de dégivrage si ce critère est satisfait.

3. Procédé selon l'une quelconque des revendications précédentes, dans lequel, si les pales de turbine (2) tournent lorsque le critère indiquant que de la glace s'est formée est satisfait, la vitesse de rotation des pales de turbine est réduite avant de réaliser l'opération de dégivrage.

4. Procédé selon l'une quelconque des revendications précédentes, dans lequel les pales de turbine (2) sont tout d'abord arrêtées avant de réaliser l'opération de dégivrage.

5. Procédé selon l'une quelconque des revendications précédentes, dans lequel, au cours de l'opération de dégivrage, les pales de turbine (2) sont entraînées en alternance dans des sens opposés à une fréquence qui est choisie pour générer une auto-oscillation dans les pales de turbine.

6. Procédé selon l'une quelconque des revendications précédentes, dans lequel, au cours de l'opération de dégivrage, les pales de turbine (2) sont entraînées par le générateur (7) de la turbine d'éolienne, lequel générateur (7) est entraîné par les pales de turbine (2) au cours d'un fonctionnement normal de la centrale électrique éolienne (1) et dans lequel, au cours de l'opération de dégivrage, le générateur (7) entraîne les pales de turbine (2) directement sans utiliser d'engrenage intermédiaire quelconque.

7. Procédé selon l'une quelconque des revendications précédentes, dans lequel, après réalisation de l'opération de dégivrage, les pales de turbine (2) sont surveillées pour déterminer s'il y a encore de la glace (12) sur les pales de turbine et, si l'on détermine que les pales de turbine (2) sont suffisamment dégivrées, on fait fonctionner la centrale électrique éolienne (1) pour générer de l'électricité.

8. Procédé selon la revendication 2 ou une revendication quelconque qui en dépend, dans lequel l'opération de surveillance consiste à mesurer la sortie réelle de la centrale électrique éolienne et (1) à à la comparer à une sortie attendue.
